# EUROPÄISCHE PATENTANMELDUNG

(11) **EP 0 864 601 A1**
(43) Veröffentlichungstag der Anmeldung: **16.09.1998**
(21) Anmeldenummer: 98103627.0
(22) Anmeldetag: 02.03.1998
(51) Int. Cl.: C08J 9/14, C08L 75/04

(54) **Verfahren zur Herstellung flammgeschützter Hartschaumstoffe auf Isocyanatbasis**

(30) Priorität: 11.03.1997 DE 19709867
(71) Anmelder: BASF AKTIENGESELLSCHAFT, 67056 Ludwigshafen (DE)
(72) Erfinder: Hensiek, Rainer, 49328 Melle (DE); von Malotki, Peter, Dr., 01936 Cosel (DE); Reichelt, Michael, 01945 Ruhland (DE); Rotermund, Udo, Dr., 01990 Ortrand (DE)

(57) **Zusammenfassung**

Gegenstand der Erfindung ist ein Verfahren zur Herstellung flammgeschützter Hartschaumstoffe auf Isocyanatbasis durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Flammschutzmitteln,
e) Wasser,
f) Treibmitteln sowie
g) weiteren Hilfsmitteln und/oder Zusatzstoffen,
   das dadurch gekennzeichnet ist, daß als Treibmittel ein Gemisch aus mindestens einem bei Raumtemperatur flüssigen Kohlenwasserstoff mit 5 oder mehr Kohlenstoffatomen im Molekül und mindestens einem bei Raumtemperatur gasförmigen Kohlenwasserstoff mit 4 oder weniger Kohlenstoffatomen im Molekül eingesetzt wird.

## Beschreibung

Die vorliegende Erfindung betrifft ein Verfahren zur Herstellung von ohne Verwendung von Fluorchlorkohlenwasserstoffen (FCKW) geblähten, flammgeschützten Hartschaumstoffen auf Isocyanatbasis, eine Treibmittelmischung für die Herstellung dieser flammgeschützten Hartschaumstoffe auf Isocyanatbasis sowie deren Verwendung überwiegend als Dämmstoffe im Bauwesen.

Hartschaumstoffe auf Isocyanatbasis, insbesondere Polyurethan- und Isocyanuratschaumstoffe, sind seit langem bekannt und werden vorwiegend zur Wärme- oder Kälteisolation, z.B. in Kühlgeräten, im Bauwesen, in Warmwasserspeichern und Fernwärmerohren, benutzt. Als Treibmittel zur Herstellung dieser Schaumstoffe setzte man bis in die jüngste Zeit FCKW, vor allem das Trichlorfluormethan, ein. Diese FCKW müssen wegen ihrer zerstörenden Wirkung auf die globale Ozonschicht durch Stoffe substituiert werden, die kein diese Ozonschicht schädigendes Potential (Ozone Depletion Potential, ODP) und einen möglichst geringen Treibhauseffekt (Global Warming Potential, GWP) aufweisen.

Aus diesen Gründen wurden Kohlenwasserstoffe als Treibmittel der Zukunft vorgeschlagen. Eine herausragende Rolle unter den Kohlenwasserstoffen nehmen die Isomere des Pentans ein, die wegen ihrer relativ niedrigen Siedepunkte recht gut als Treibmittel zur Herstellung von Hartschaumstoffen auf Isocyanatbasis geeignet sind. Die Anwendung von Pentanderivaten wird bereits in der 3.Auflage des Kunststoff-Handbuches, herausgegeben von G.Becker und D. Braun, Band 7, herausgegeben von G.Oertel, Carl Hanser Verlag, München, Wien, 1993, z.B. auf Seite 115 ff. erwähnt.

Mit dem Austausch von FCKW durch alternative Blähmittel, wie HFCKW, HFKW, CO₂ und insbesondere durch die kostengünstigen Kohlenwasserstoffe erhöht sich der Aufwand, der zur Erreichung eines gleichbleibend guten Brandschutzverhaltens betrieben werden muß. Dies äußert sich insbesondere in höheren Mengen Flammschutzmittel, die den Formulierungen zugefügt werden müssen. Erhöhte Mengen an Flammschutzmitteln können zu verschlechterten Schaumstoffeigenschaften führen und sind ein nicht unerheblicher Kostenfaktor. Die Suche nach effizienten Blähmitteln auf Kohlenwasserstoffbasis, die das Brandverhalten günstig beeinflussen und damit eine möglichst geringe Flammschutzmittelmenge für einen ausreichenden Flammschutz erfordern, ist daher eine wichtige technische Aufgabe.

Auf die Verwendung von Kohlenwasserstoffen als physikalisch wirkende Blähmittel als Alternative zu halogenhaltigen Blähmitteln, insbesondere auf das Blähen von Polyurethan-Hartschaumstoffen mit Pentan wird auch in den Veröffentlichungen von Heilig,G., Kunststoffe 81 (1991), S.622-625, und Heilig,G. u.a., Kunststoffe 81 (1991), S.790-794, ausführlich eingegangen. U. a. wird darin auch auf die höheren Anteile an Flammschutzmitteln hingewiesen, die erforderlich sind.

Als Möglichkeit zur Herstellung von Polyurethan-Hartschaumstoffen mit geringer Wärmeleitfähigkeit werden in EP-A-0421269 u.a. Blähmittelgemische aus Cyclopentan bzw. Cyclohexan mit Kohlenwasserstoffen mit vier oder weniger Kohlenstoffatomen vorgeschlagen. Vorzugsweise wird hier ohne Flammschutzmittel gearbeitet. Der erhöhte Brandschutz ist nicht Ziel dieser Erfindung.

In der eigenen Patentanmeldung Nr. 19526979.9 wird zur Verbesserung des Fließverhaltens im aufschäumenden Reaktionsgemisch der Einsatz von Cyclopentan und/oder anderen niedrigsiedenden Kohlenwasserstoffen gemeinsam mit niedermolekularen monofunktionellen, primäre oder sekundäre Hydroxylgruppen enthaltenden Alkoholen, gegebenenfalls in Verbindung mit Wasser, als Treibmittel beschrieben.

In EP-A-0657495 werden als halogenfreie Blähmittelgemische azeotrope Gemische aus cycloaliphatischen Kohlenwasserstoffen mit 5 bis 7 Kohlenstoffatomen einerseits und bei Raumtemperatur flüssigen Äthern, Carbonsäureestern oder Ketonen andererseits für Polyurethan-Hartschäume mit niedrigen Rohdichten und verbessertem Wärmedämmvermögen beschrieben. Die verwendeten, sauerstoffhaltigen Bestandteile der beschriebenen azeotropen Mischungen lösen sich wegen ihrer höheren Polarität zu beträchtlichen Teilen in der Polyurethan-Matrix. Durch den dadurch verursachten Weichmachereffekt werden die mechanischen Festigkeiten verschlechtert. Insbesondere Schaumstoffe mit niedrigen Dichten neigen dadurch zu Schrumpferscheinungen.

Der Erfindung lag daher die Aufgabe zugrunde, Blähmittel zu finden, die die angegebenen Mängel nicht aufweisen und das Brandverhalten der Schäume günstig beeinflussen.

Diese Aufgabe konnte überraschenderweise dadurch gelöst werden, daß als Treibmittel ein Gemisch aus mindestens einem bei Raumtemperatur flüssigen Kohlenwasserstoff mit 5 oder mehr Kohlen-stoffatomen im Molekül und mindestens einem bei Raumtemperatur gasförmigen Kohlenwasserstoff mit 4 oder weniger Kohlenstoffatomen im Molekül eingesetzt wird.

Gegenstand der Erfindung ist demzufolge ein Verfahren zur Herstellung flammgeschützter Hartschaumstoffe auf Isocyanatbasis durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Flammschutzmitteln,
e) Wasser,
f) Treibmitteln sowie
g) weiteren Hilfsmitteln und/oder Zusatzstoffen,
   das dadurch gekennzeichnet ist, daß als Treibmittel ein Gemisch aus mindestens einem bei Raumtemperatur flüssigen Kohlenwasserstoff mit 5 oder mehr Kohlenstoffatomen im Molekül und mindestens einem bei Raumtemperatur gasförmigen Kohlenwasserstoff mit 4 oder weniger Kohlenstoffatomen im Molekül eingesetzt wird.

Gegenstände der Erfindung sind weiterhin eine Treibmittelmischung zur Herstellung flammgeschützter Hartschaumstoffe auf Isocyanatbasis sowie deren Verwendung als Isoliermaterial im Bauwesen.

Besonders überraschend war, daß durch die Mitverwendung der leichtentzündlichen, gasförmigen Kohlenwasserstoffe mit vier und weniger Kohlenstoffatomen, zu denen auch die als Flüssiggase bekannten, energiereichen Brennstoffe zählen, die Brennbarkeit der Schaumstoffe verringert wird.

Von den bei Raumtemperatur flüssigen Kohlenwasserstoffen mit fünf oder mehr Kohlenstoffatomen im Molekül sind cyclische und nicht cyclische Vertreter einsetzbar. Die gewünschten Effekte werden bei Verwendung von Alkanen und Alkenen erreicht. Bevorzugt werden solche mit fünf oder sechs Kohlenstoffatomen, wie n-Hexan und dessen Isomere, 1-, 2-, 3-Hexen und dessen Isomere, Cyclohexan und Methylcyclohexan. Besonders vorteilhaft und deshalb insbesondere bevorzugt sind n-Pentan, iso-Pentan, neo-Pentan und Cyclopentan.

Einsetzbar sind aber auch weitere flüssige Kohlenwasserstoffe, insbesondere Alkane und Alkene sowie deren Isomere mit sieben bis zehn Kohlenstoffatomen im Molekül, wie beispielsweise n-Heptan, n-Octan, n-Nonan und n-Decan und deren Isomere, Methylcyclohexan, die Isomere des Dimethylcyclohexan, die Isomere von Hepten, Octen, Nonen und Decen.

Diese flüssigen Kohlenwasserstoffe können einzeln oder im Gemisch untereinander eingesetzt werden.

Von den bei Raumtemperatur gasförmigen Kohlenwasserstoffen mit vier oder weniger Kohlenstoffatomen im Molekül sind solche mit drei oder vier Kohlenstoffatomen bevorzugt, wie Propan, Cyclopropan, Propen, Cyclobutan, 1-Buten, cis- und trans-2-Buten, iso-Buten und Methylcyclopropan. Besonders bevorzugt eingesetzt werden n-Butan und iso-Butan.

Es können aber auch Methan, Ethan und Ethen Verwendung finden.

Diese gasförmigen Kohlenwasserstoffe können allein oder im Gemisch untereinander eingesetzt werden.

Die bei Raumtemperatur flüssigen Kohlenwasserstoffe mit 5 oder mehr Kohlenstoffatomen im Molekül werden vorzugsweise in einer Menge von 0,1 bis 10 Masse-%, insbesondere bevorzugt in einer Menge von 2 bis 6 Masse-%, bezogen auf die Gesamtmenge des Schaumstoffes, eingesetzt.

Die bei Raumtemperatur gasförmigen Kohlenwasserstoffe mit 4 oder weniger Kohlenstoffatomen im Molekül werden vorzugsweise in einer Menge von 0,1 bis 10 Masse-%, insbesondere bevorzugt in einer Menge von 2 bis 6 Masse-%, bezogen auf die Gesamtmenge des Schaumstoffes, eingesetzt.

Vorzugsweise wird für die Herstellung der erfindungsgemäßen flammgeschützten Hartschaumstoffe auf Isocyanatbasis eine Treibmittelmischung, bestehend aus einem Gemisch aus mehreren bei Raumtemperatur flüssigen Kohlenwasserstoffen mit 5 oder mehr Kohlenstoffatomen im Molekül und mehreren bei Raumtemperatur gasförmigen Kohlenwasserstoffen mit 4 oder weniger Kohlenstoffatomen im Molekül eingesetzt, die in Verbindung mit dem aus Wasser und Isocyanat entstehenden Kohlendioxid ihre blähende Wirkung entfaltet.

Das Gemisch aus bei Raumtemperatur flüssigen Kohlenwasserstoffen mit 5 oder mehr Kohlenstoffatomen im Molekül und bei Raumtemperatur gasförmigen Kohlenwasserstoffen mit 4 oder weniger Kohlenstoffatomen im Molekül kann separat durch vorheriges Vermischen dieser Komponenten, beispielsweise in einem Autoklaven unter Druck, hergestellt werden. Dieses Gemisch wird dann in üblicher Weise vorzugsweise der Polyolkomponente zugefügt. Es ist auch möglich, die Kohlenwasserstoffkomponenten einzeln in den Produktstrom, vorzugsweise die Polyolkomponente, unmittelbar vor der Zuführung zum Mischkopf für die Vermischung von Polyol- und Isocyanatkomponente zu dosieren. Außerdem ist die Dosierung in einen speziellen Mehrkomponenten-Mischkopf möglich. Die Handhabung der Kohlenwasserstoffe mit Pumpen, Dosieraggregaten und Vorratsbehältern erfolgt in bekannter Weise.

Die Herstellung der erfindungsgemäßen flammgeschützten Hartschaumstoffe auf Isocyanatbasis erfolgt durch Umsetzung in an sich bekannter Weise von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Flammschutzmitteln,
e) Wasser,
f) der erfindungsgemäßen Treibmittelmischung sowie
g) weiteren Hilfsmitteln und/oder Zusatzstoffen.

Bei diesen Hartschaumstoffen auf Isocyanatbasis handelt es sich vor allem um solche, die als charakteristische chemische Strukturelemente Urethan- und/oder Isocyanurat- und/oder Biuret- und/oder Allophanat- und/oder Uretdion- und/oder Harnstoff- und/oder Carbodiimidgruppen enthalten.

Zur Herstellung der Hartschaumstoffe auf Isocyanatbasis nach dem erfindungsgemäßen Verfahren finden, mit Ausnahme der Treibmittel (d), die an sich bekannten Aufbaukomponenten Verwendung, zu denen im einzelnen folgendes auszuführen ist.
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylendiisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.
   Besonders bewährt haben sich Diphenylmethan-diisocyanat-Isomerengemische oder Roh-MDI mit einem Diphenylmethandiisocyanatisomerengehalt von 33 bis 55 Masse-% und urethangruppenhaltige Polyisocyanatgemische auf Basis von Diphenylmethan-diisocyanat mit einem NCO-Gehalt von 15 bis 33 Masse-%.
b) Als höhermolekulare Verbindungen mit mindestens zwei reaktiven Wasserstoffatomen (b) werden zweckmäßigerweise solche mit einer Funktionalität von 2 bis 8, vorzugsweise 2 bis 6, und einem Molekulargewicht von 300 bis 8000, vorzugsweise von 300 bis 3000, verwendet. Bewährt haben sich z.B. Polyetherpolyamine und/oder vorzugsweise Polyole ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Der Hydroxylzahl der Polyhydroxylverbindungen beträgt dabei in aller Regel 150 bis 850 mg KOH/g und vorzugsweise 200 bis 600 mg KOH/g .
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.
   Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert.
   Die erhaltenen Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.
   Insbesondere als Polyole verwendet werden jedoch Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyetherpolyole, vorzugsweise Polyoxypropylen- und Polyoxypropylen-polyoxyethylenpolyole, besitzen eine Funktionalität von vorzugsweise 2 bis 6 und insbesondere 2 bis 4 und Molekulargewichte von 300 bis 3000, vorzugsweise 300 bis 2000 und insbesondere 400 bis 2000 und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyetherpolyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyetherpolyole können ebenso wie die Polyesterpolyole einzeln oder in Form von Mischungen verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).
c) Die Hartschaumstoffe auf Isocyanatbasis können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Komponente (b) zum Einsatz.
d) Die erfindungsgemäßen Hartschaumstoffe auf Isocyanatbasis sind flammgeschützt. Als Flammschutzmittel können alle in der Polyurethanchemie für diesen Anwendungszweck üblichen Stoffe eingesetzt werden. Vorwiegend verwendet man Halogen- und Phosphorverbindungen.
   Geeignete Flammschutzmittel sind beispielsweise Trikresylphosphat,Tris-(2-chlorethyl)phosphat, Tris-(2-chlorpropyl) phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.
   Da der Hartschaumstoff auf Isocyanatbasis der Zukunft nur mit halogenfreien Zusatzstoffen gefertigt werden sollte, sollten auch die Flammschutzmittel halogenfrei sein. Hier kommen beispielsweise gegenüber Isocyanat reaktive Derivate der Phosphorsäure, der phosphorigen Säure oder der Phosphonsäure in Frage, gegebenenfalls in Kombination mit nichtreaktiven flüssigen und/oder festen halogenfreien Flammschutzmitteln, z.B. aus organischen Derivaten der Phosphorsäure, Phosphonsäure oder phosphorigen Säure bzw. Salzen der Phosphorsäure.
   Außer den bereits genannten Stoffen können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit eingesetzt werden.
   Besonders bevorzugt werden Tris-(2-chlorpropyl)phosphat, Derivate der Phosphonsaure, Ammoniumpolyphosphat und Blähgraphit.
   Der Einsatz der erfindungsgemäßen halogenfreien Treibmittelmischung (f) aus flüssigen und gasförmigen Kohlenwasserstoffen verhindert die Anwendung unnötig hoher Mengen an Kohlenwasserstoff und liefert damit einen indirekten Beitrag zum Flammschutz. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.
e) Als chemisch wirkendes Treibmittel wird Wasser eingesetzt, das mit Isocyanatgruppen der Komponente (a) unter Bildung von Kohlendioxid reagiert. Das Wasser wird vorzugsweise der Komponente (b) in einer Menge von 0,5 bis 5 Gew.-%, bezogen auf das Gewicht der Komponente (b), zugesetzt. Der Wasserzusatz kann in Kombination mit dem Einsatz der erfindungsgemäß zu verwendenden Treibmittel erfolgen.
f) Erfindungsgemäß wird zur Herstellung der flammgeschützten Hartschaumstoffe auf Isocyanatbasis eine Treibmittelmischung, bestehend aus einem Gemisch aus mindestens einem bei Raumtemperatur flüssigen, nicht cyclischen Kohlenwasserstoff mit 5 oder mehr Kohlenstoffatomen im Molekül und mindestens einem bei Raumtemperatur gasförmigen Kohlenwasserstoff mit 4 oder weniger Kohlenstoffatomen im Molekül, wie weiter oben beschrieben, eingesetzt. Wie ebenfalls weiter oben bereits ausgeführt, wird die erfindungsgemäße Treibmittelmischung vorteilhafterweise in die aus den Aufbaukomponenten (b), (d), (e), den Katalysatoren (g) und gegebenenfalls (c) und weiteren Hilfsmitteln und/oder Zusatzstoffen (g) bestehende Polyolkomponente eingebracht bzw. es werden die Kohlenwasserstoffe einzeln dosiert.
g) Zur Herstellung der flammgeschützten Hartschaumstoffe werden üblicherweise Katalysatoren sowie gegebenenfalls weitere Hilfsmittel und/oder Zusatzstoffe eingesetzt.
   Als Katalysatoren (g) werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. Die Isocyanatgruppen können durch geeignete Katalysatoren (g) aber auch miteinander zur Reaktion gebracht werden, wobei neben den Addukten zwischen Isocyanaten (a) und den Verbindungen mit wasserstoffaktiven Gruppen (b) vorzugsweise Isocyanuratstrukturen entstehen.
   Als Katalysatoren werden also insbesondere solche Stoffe verwendet, die Reaktionen der Isocyanate beschleunigen, insbesondere die Urethan-, Harnstoff- und Isocyanuratbildung.
   Bevorzugt hierfür sind tertiäre Amine, Zinn- und Bismutumverbindungen, Alkali- und Erdalkalicarboxylate, quarternäre Ammoniumsalze, s-Hexahydrotriazine und Tris-(dialkylaminomethyl)-phenole.
   In Betracht kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bi-cyclo-(2,2,2)-octan, und Alkanolaminverbindungen, wie Triethanolamin,Triisopropanolamin, N-Methyl- und N-Ethyldiethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
   Der Reaktionsmischung zur Herstellung der erfindungsgemäßen Hartschaumstoffe auf Isocyanatbasis können neben den Katalysatoren gegebenenfalls auch noch weitere Hilfsmittel und/oder Zusatzstoffe (g) einverleibt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Stärke, Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.

Nähere Angaben über oben genannte und weitere Ausgangsstoffe sind der Fachliteratur, beispielsweise der Monographie von H. J. Saunders und K. C. Frisch "High Polymers" Band XVI, Polyurethanes Teil 1 und 2 , Verlag Interscience Publishers 1962 bzw. 1964 oder dem bereits erwähnten Kunststoffhandbuch, Polyurethane, Band VII, Carl Hanser Verlag, München, Wien, 1., 2. und 3. Auflage , 1966, 1983 und 1993 zu entnehmen.

Zur Herstellung der Hartschaumstoffe auf Isocyanatbasis werden die organischen und/oder modifizierten organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,75:1, vorzugsweise 1,0 bis 1,3:1 und insbesondere 1,1 bis 1,2:1, beträgt. Falls die Hartschaumstoffe auf Isocyanatbasis zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 3 bis 8:1 angewandt.

Die erfindungsgemäßen Hartschaumstoffe auf Isocyanatbasis werden vorzugsweise nach dem Gieß- oder Sprühverfahren hergestellt. Insbesondere wird dabei die Block- oder Formverschäumung oder die kontinuierliche Fertigung nach dem Doppeltransportbandverfahren angewendet. Vorteilhafterweise wird nach dem one shot-Verfahren, beispielsweise mit Hilfe der Hochdruck- oder Niederdruck-Technik in offenen oder geschlossenen Formwerkzeugen, gearbeitet. Als besonders vorteilhaft hat es sich erwiesen, nach dem Zweikomponenten-Verfahren zu arbeiten und die Aufbaukomponenten (b), (d), (e), (f) und Katalysatoren (g) sowie gegebenenfalls (c) und weiteren Hilfsmittel und/oder Zusatzstoffen (g) in der Komponente (A) zu vereinigen und als Komponente (B) die organischen Polyisocyanate und/oder modifizierten Polyisocyanate (a) oder Mischungen aus den genannten Polyisocyanaten und gegebenenfalls Treibmittel (f) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

In geschlossenen Formen kann auch mehr schaumbildendes Reaktionsgemisch verwendet werden, als zur vollständigen Ausfüllung der Form erforderlich ist. Man erhält dann verdichtete Schaumstoffe.

Die nach dem erfindungsgemäßen Verfahren hergestellten Polyurethan-Hartschaumstoffe oder Hartformschaumstoffe weisen eine Dichte von 0,02 bis 0,75 g/cm³, vorzugsweise von 0,025 bis 0,24 g/cm³ und insbesondere von 0,03 bis 0,1 g/cm³ auf.

Die Produkte finden vorzugsweise als wärmedämmende Baustoffe Anwendung.

Die Erfindung soll an den nachfolgenden Ausführungsbeispielen näher erläutert werden:

### Ausführungsbeispiele 1 - 4 und Vergleichsbeispiele 1 - 2:

Für die in Tabelle 1 angegebenen Formulierungen für die Beispiele und Vergleichsbeispiele wurde folgende Polyolabmischung (Polyol) hergestellt:

| | |
|---|---|
| Poyetheralkohol auf Basis Sorbit/Propylenoxid, Hydroxylzahl 355 mg KOH/g, | 48 Masseteile |
| Polyethylenglykol, Hydroxylzahl 190 mg KOH/g, | 5 Masseteile |
| Ricinusöl, Hydroxylzahl 165 mg KOH/g, | 15 Masseteile |
| Trischlorpropylphosphat, | 20 Masseteile |
| Diphenylkresylphosphat, | 10 Masseteile |
| Schaumstabilisator auf siliciumorganischer Basis (DABCO DC 193, Air Products), | 2 Masseteile. |

Für die Beispiele und Vergleichsbeispiele wurden folgende physikalisch wirkende Treibmittel verwendet:

| Treibmittel 1 (erfindungsgemäß): | |
|---|---|
| n-Pentan | 68 Masseteile |
| iso-Pentan | 7 Masseteile |
| n-Butan | 10 Masseteile |
| iso-Butan | 5 Masseteile |

| Treibmittel 2 (erfindungsgemäß): | |
|---|---|
| Cyclopentan | 72 Masseteile |
| n-Butan | 28 Masseteile |

| Treibmittel 3 (erfindungsgemäß): | |
|---|---|
| n-Pentan | 70 Masseteile |
| iso-Pentan | 8 Masseteile |
| n-Butan | 7 Masseteile |
| iso-Butan | 4 Masseteile |
| Propan | 1 Masseteil |

| Treibmittel 4 (Vergleich): | |
|---|---|
| n-Pentan | 80 Masseteile 20 Masseteile |
| iso-Pentan | |

| Treibmittel 5 (Vergleich): | |
|---|---|
| Cyclopentan | 100 Masseteile. |

Zur Herstellung von Polyurethan-Polyisocyanurat-Hartschaumstoffen wurde von den in Tabelle 1 aufgeführten Formulierungen jeweils ein Ansatz von 500 g in einem Rührbehälter hergestellt und 480 g davon in eine Schäumform mit Deckel der Abmessung 210 x 210 x 200 mm überführt. Dabei wurde eine Bruttorohdichte des Schaumstoffes von ca. 55 g/dm³ bei einer Verdichtung von ca. 10 Prozent erreicht. Nach einer Aushärtezeit von einer Stunde wurde entformt und 24 Stunden nach der Herstellung das Brandverhalten nach DIN 4102 bestimmt.

Die Ergebnisse der Brandprüfung sind im unteren Teil der Tabelle 1 dargestellt und zeigen das verbesserte Brandverhalten bei Verwendung der erfindungsgemäßen Treibmittel.

Die Treibwirkung der erfindungsgemäßen Treibmittelgemische ist besser als die Treibwirkung von bei Raumtemperatur flüssigen Kohlenwasserstoffen allein.

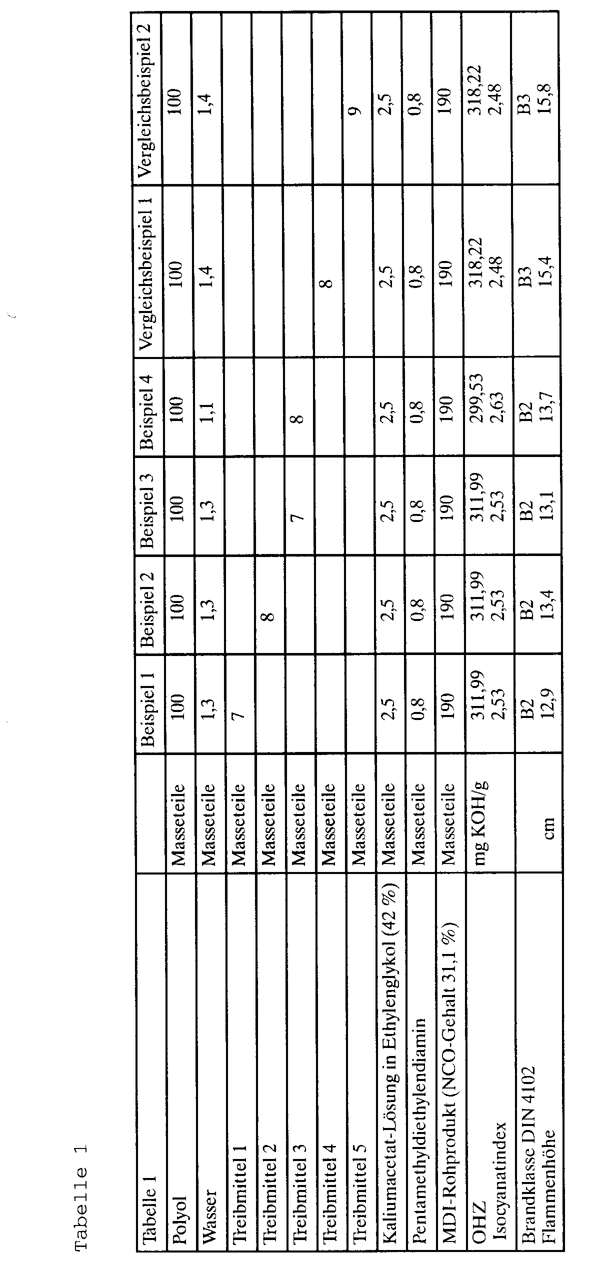

## Patentansprüche

1. Verfahren zur Herstellung flammgeschützter Hartschaumstoffe auf Isocyanatbasis durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Flammschutzmitteln,
e) Wasser,
f) Treibmitteln sowie
g) weiteren Hilfsmitteln und/oder Zusatzstoffen,
dadurch gekennzeichnet, daß als Treibmittel ein Gemisch aus mindestens einem bei Raumtemperatur flüssigen Kohlenwasserstoff mit 5 oder mehr Kohlenstoffatomen im Molekül und mindestens einem bei Raumtemperatur gasförmigen Kohlenwasserstoff mit 4 oder weniger Kohlenstoffatomen im Molekül eingesetzt wird.

2. Verfahren nach Anspruch 1, dadurch gekennzeichnet, daß die bei Raumtemperatur flüssigen Kohlenwasserstoffe mit 5 oder mehr Kohlenstoffatomen im Molekül in einer Menge von 0,1 bis 10 Masse-%, bezogen auf die Gesamtmenge des Schaumstoffes, eingesetzt werden.

3. Verfahren nach Anspruch 1 oder 2, dadurch gekennzeichnet, daß die bei Raumtemperatur gasförmigen Kohlenwasserstoffe mit 4 oder weniger Kohlenstoffatomen im Molekül in einer Menge von 0,1 bis 10 Masse-%, bezogen auf die Gesamtmenge des Schaumstoffes, eingesetzt werden.

4. Verfahren nach einem der Ansprüche 1 bis 3, dadurch gekennzeichnet, daß als bei Raumtemperatur flüssige Kohlenwasserstoffe mit 5 oder mehr Kohlenstoffatomen im Molekül Cyclopentan, Cyclohexan und/oder Methylcyclohexan verwendet werden.

5. Verfahren nach einem der Ansprüche 1 bis 3, dadurch gekennzeichnet, daß als bei Raumtemperatur flüssige Kohlenwasserstoffe mit 5 oder mehr Kohlenstoffatomen im Molekül nicht cyclische Kohlenwasserstoffe verwendet werden.

6. Verfahren nach Anspruch 5, dadurch gekennzeichnet, daß als bei Raumtemperatur flüssige, nicht cyclische Kohlenwasserstoffe mit 5 oder mehr Kohlenstoffatomen im Molekül n-Pentan und/oder iso-Pentan verwendet werden.

7. Verfahren nach Anspruch 5, dadurch gekennzeichnet, daß als bei Raumtemperatur flüssige, nicht cyclische Kohlenwasserstoffe mit 5 oder mehr Kohlenstoffatomen im Molekül n-Hexan und/oder dessen Isomere verwendet werden.

8. Verfahren nach einem der Ansprüche 1 bis 3, dadurch gekennzeichnet, daß als bei Raumtemperatur flüssige Kohlenwasserstoffe mit 5 oder mehr Kohlenstoffatomen im Molekül Alkene verwendet werden.

9. Verfahren nach einem der Ansprüche 1 bis 3 oder 8, dadurch gekennzeichnet, daß als bei Raumtemperatur flüssige Kohlenwasserstoffe mit 5 oder mehr Kohlenstoffatomen im Molekül Hexene und/oder deren Isomere verwendet werden.

10. Verfahren nach einem der Ansprüche 1 bis 9, dadurch gekennzeichnet, daß als bei Raumtemperatur gasförmige Kohlenwasserstoffe mit 4 oder weniger Kohlenstoffatomen im Molekül solche mit 3 oder 4 Kohlenstoffatomen verwendet werden.

11. Verfahren nach einem der Ansprüche 1 bis 10, dadurch gekennzeichnet, daß als bei Raumtemperatur gasförmiger Kohlenwasserstoff mit 4 oder weniger Kohlenstoffatomen im Molekül n-Butan verwendet wird.

12. Verfahren nach einem der Ansprüche 1 bis 10, dadurch gekennzeichnet, daß als bei Raumtemperatur gasförmiger Kohlenwasserstoff mit 4 oder weniger Kohlenstoffatomen im Molekül iso-Butan verwendet wird.

13. Treibmittelmischung für die Herstellung von flammgeschützten Hartschaumstoffen auf Isocyanatbasis nach Anspruch 1, bestehend aus einem Gemisch aus mindestens einem bei Raumtemperatur flüssigen Kohlenwasserstoff mit 5 oder mehr Kohlenstoffatomen im Molekül und mindestens einem bei Raumtemperatur gasförmigen Kohlenwasserstoff mit 4 oder weniger Kohlenstoffatomen im Molekül in Verbindung mit dem aus Wasser und Isocyanat entstehenden Kohlendioxid.

14. Verwendung der gemäß Anspruch 1 hergestellten flammgeschützten Hartschaumstoffe auf Isocyanatbasis als Isoliermaterial im Bauwesen.
